Europäisches Patentamt

European Patent Office

Office européen des brevets

(11) Publication number: **0 466 046 A1**

## EUROPEAN PATENT APPLICATION

(21) Application number: **91111224.1**

(22) Date of filing: **05.07.91**

(51) Int. Cl.5: **B66F 17/00, G01L 5/13**

(30) Priority: **11.07.90 GB 9015284**
**09.05.91 GB 9110034**

(43) Date of publication of application:
**15.01.92 Bulletin 92/03**

(84) Designated Contracting States:
**AT BE CH DE DK ES FR GB GR IT LI LU NL SE**

(71) Applicant: **J.C. BAMFORD EXCAVATORS
LIMITED**
**Rocester**
**Uttoxeter Staffordshire ST14 5JP(GB)**

(72) Inventor: **Troman, David Anthony**

**21 Shaw Street**
**Ruddington, Nottinghamshire NG11 6HF(GB)**
Inventor: **Mechan, Michael John**
**68 Leconfield Road**
**Loughbourough LE11 3SP(GB)**
Inventor: **Bishop, Gary Michael**
**8 Bulstrode Place**
**Kegworth, Derbyshire DE7 2DS(GB)**

(74) Representative: **Lucking, David John et al**
**FORRESTER & BOEHMERT**
**Widenmayerstrasse 4**
**W-8000 München 22(DE)**

(54) **Load sensing arrangement.**

(57) A load sensing arrangement comprises first (11) and second (14) members connected together by a pin (30) for relative movement about the axis (31) of the pin (30), the pin (30) having an internal hollow (33), at least two strain gauge means (51-54) spaced longitudinally along the pin (30) and each being secured to a side wall (49) of the pin (30) and there being an electronic circuit (39) located within the internal hollow (38) of the pin (30), longitudinally between the two strain gauge means (S1,S2;S3,S4), each strain gauge means (51-54) being electrically connected to the electronic circuit (39) which includes an amplifier to amplify signals produced by the strain gauge means (S1-S4), means to provide a signal from the electronic circuit (39) to a remote indicating means (27,28) which at least indicates when the load transmitted from the first (11) to the second member (14) through the pin (30), sensed by the strain gauge means (S1-S4), reaches a threshold value.

FIG 1

FIG 3

This invention relates to a load sensing arrangement and more particularly but not exclusively, to a load sensing arrangement for sensing a load transmitted between a body of a vehicle and an axle carried thereby.

Arrangements have been proposed, for example in British Patent 1528741 in which a strain gauge is carried by a pin which connects an axle with a vehicle body.

This invention provides an improved load sensing arrangement.

According to one aspect of the invention we provide a load sensing arrangement comprising first and second members connected together by a pin for relative movement about the axis of the pin, the pin having an internal hollow, at least two strain gauge means spaced longitudinally along the pin and each being secured to a side wall of the pin each strain gauge means being electrically connected to the electronic circuit which includes an amplifier to amplify signals produced by the strain gauge means, means to provide a signal from the electronic circuit to a remote indicating means which at least indicates when the load transmitted from the first to the second member through the pin, sensed by the strain gauge means, reaches a threshold value the electronic circuit being located within the internal hollow of the pin, longitudinally between the two strain gauge means.

Thus the amplifier of the electronic circuit amplifies the very small level signal from the strain gauge means before transmitting the signal to the remote indicating means and is protected inside the hollow of the pin, and the pin and electronic circuit are conveniently provided as a single component to facilitate assembly and maintenance.

The invention has been devised particularly but not exclusively for use in sensing a load transmitted from a body to an axle of a load carrying vehicle of the kind having a working arm mounted at one end on the body of the vehicle, and the arm carrying at its other end a working implement such as a pair of forks, or a bucket, for examples only.

It will be appreciated that where such an arm extends outwardly of the vehicle, for example forwardly of the vehicle, if the arm is loaded to an extent which exceeds the lifting capacity of the vehicle, there would be a tendency for the vehicle to tip. In a vehicle having two pairs of wheels, and the working arm extending forwardly, the rear wheels could be raised from the ground as the vehicle tips, thus endangering the operator of the vehicle. The problem particularly arises where the working arm is telescopic and the working implement is loaded, with the working implement near to the vehicle body, and then the arm is telescoped outwardly to move the loaded working implement away from the body.

The load sensing arrangement of the present invention can be used to provide a warning to an operator of a vehicle of the kind specified that the vehicle is about to tip.

According to a second aspect of the invention we provide a pin for a load sensing arrangement according to the first aspect of the invention.

According to a third aspect of the invention we provide a vehicle of the kind having a working arm mounted at one end on the body of the vehicle, and the arm carrying at its other end, a working implement such as a pair of forks, or a bucket, for examples only, including a load sensing arrangement in accordance with the first aspect of the invention, provided at the connection between a rear axle of the vehicle and the body thereof.

The invention will now be described with reference to the accompanying drawings in which:

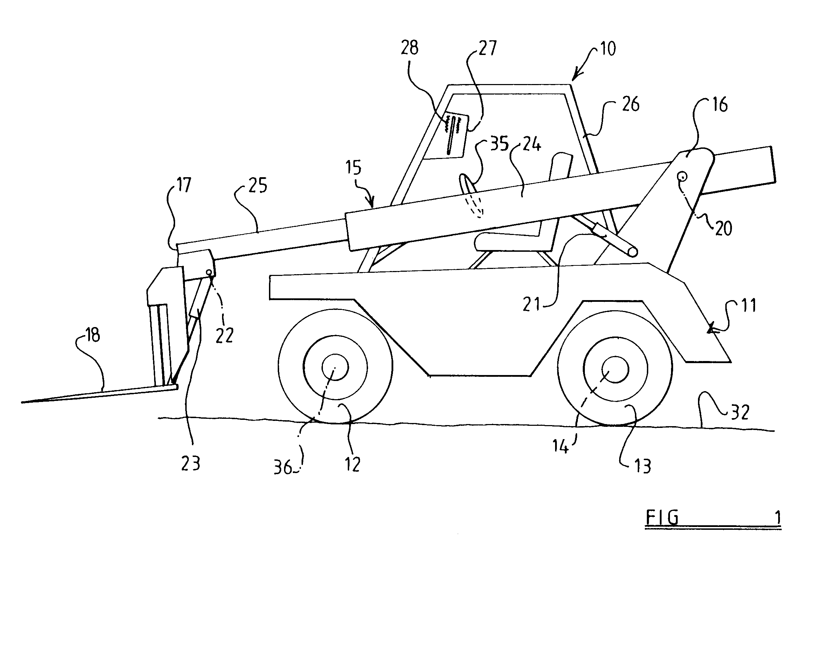

FIGURE 1 is a side view of a vehicle including a load sensing arrangement in accordance with the invention;

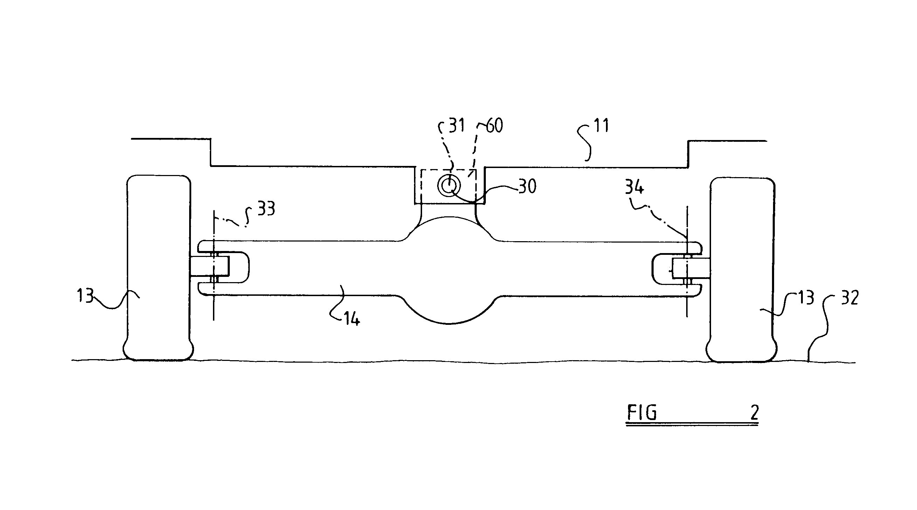

FIGURE 2 is an illustrative rear view of the vehicle of Figure 1 to an enlarged scale, with parts of the body of the vehicle omitted for clarity;

FIGURE 3 is an exploded perspective view of part of a load sensing arrangement in accordance with the invention,

FIGURE 3a is a side sectional view through an assembled pin of the part of the load sensing arrangement shown in figure 3.

Referring to the drawings, a load handling vehicle 10 comprises a body 11, a front pair of wheels 12 and a rear pair of wheels 13, the front wheels 12 being carried by a first axle 36, and the rear wheels 13 being carried by a second axle 14.

The body 11 has mounted upon it a working arm 15 which is mounted adjacent one end on a mounting 16 of the body 11 of the vehicle, and extends forwardly outwardly of the body 11, the other end 17 of the arm 15 carrying a working implement which in the present instance is a pair of forks 18. The working arm 15 can be raised and lowered about an axis 20 by means of a pair of hydraulic actuators 21, only one of which can be seen in the drawing, although in another arrangement, a single actuator only, may perform this task. The working implement 18 can be moved relative to the arm 15 about a further axis 22 by means of a further hydraulic actuator 23 to enable the forks 18 to be loaded, and unloaded.

The arm 15 is telescopic, comprising an outer part 24 which is attached to the mounting 16, and an inner telescopically movable part 25 which carries the working implement 18. The arm 15 can be telescoped inwardly and outwardly by means of one or more hydraulic actuators located within the working arm 15.

The vehicle 10 further comprises an operator's cab 26 comprising part of the body 11 of the vehicle 10, there being within the operator's cab 26, an indicating means 27 the purpose of which will become apparent hereinafter.

The rear axle 14 is connected to the body 11 by a pin 30, a central axis 31 of the pin coinciding with a longitudinal axis of the vehicle 10. Thus the axle 14 can oscillate about the axis 31 relative to the body 11 of the vehicle, as the vehicle travels over ground 32, to accommodate any bumps in the ground. If desired, dampers (not shown) may be provided between the axle 14 and the body 11. The rear axle 14 carries the wheels 13 which are each movable relative to the axle 14 about a respective vertical axis 33,34, under the control of hydraulic actuators (not shown) whereby the vehicle 11 can be steered by movement of a steering wheel 35 within the operator's cab 26.

It will be appreciated that if the forks 18 are loaded to an extent which exceeds the load carrying capacity of the vehicle 10, there would be a tendency of the vehicle to tip about an axis 36 of the front wheels 12 thus lifting the rear wheels 13 from the ground 32. For example, if the forks 18 were loaded with the working arm 15 in an inwardly telescoped condition, and then the arm 15 were lifted and the arm telescoped outwardly to move the forks 18 further away from the body 11, a point could be reached where the vehicle 10 would tip about axis 36.

To provide a warning to an operator of this impending condition, a load sensing arrangement is provided which signals the indicating device 27 within the operator's cab 26.

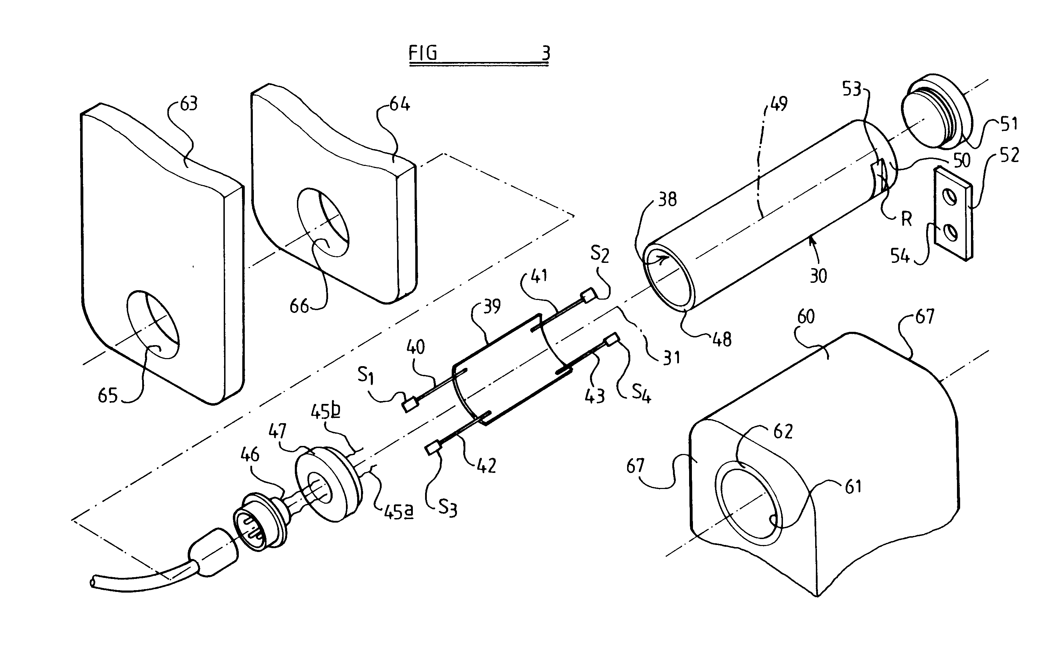

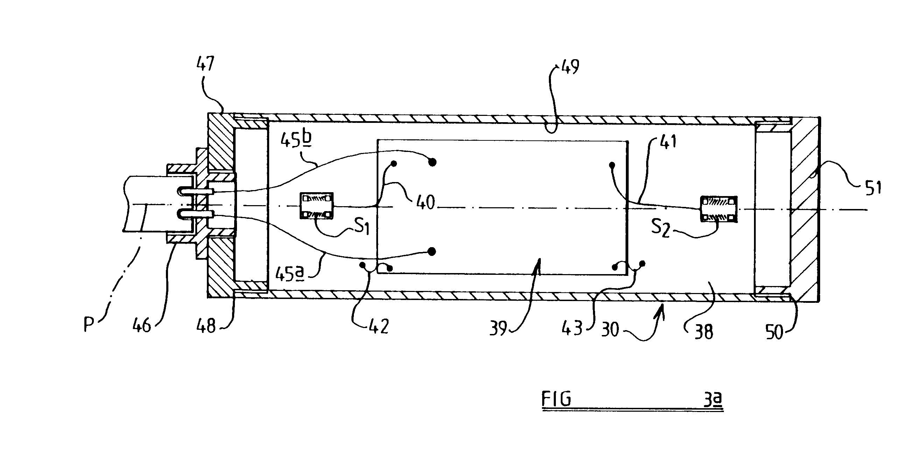

The load sensing arrangement is shown in detail in Figures 3 and 3a. It can be seen that the pin 30 has an internal hollow 38 which in this example, extends for the length of the pin 30 and opens at either end.

Within the hollow 38 an electronic circuit 39 is received, the circuit comprising a flexible printed circuit board from which a plurality of electrical leads 40 to 43 extend to respective strain gauge pairs S1 to S4. Hence four strain gauge pairs S1 to S4 are provided on the pin 30, two at or adjacent each end, the strain gauge pairs S1, S2, being arranged at an opposite side of a diametric plane P of the pin 30 to strain gauge pairs S3,S4. The electronic circuit 39 is located longitudinally between strain gauge pairs S1,S3 and S2,S4.

The leads 40 to 43 provide electrical connections to the strain gauge pairs S1 to S4. Thus any signals from the strain gauge pairs S1 to S4 are passed to the electronic circuit 39 via the leads 40 to 43.

The circuit 39 comprises an amplifier which amplifies the very low level signals from the strain gauge pairs S1 to S4 and then passes a signal via a further electrical conductor to the remote indicating means 27 within the operator's cab 26, via a plug and socket connector, the socket comprising a first part 46 which carries terminals which are electrically connected via further leads 45a, 45b, to the circuit board 39, and a second part 47 into which the first part 46 is a screw fit, the second part 47 in use being glued or otherwise secured in the opening of the hollow 38 at one end 48 of the pin 30.

At the opposite end 50 of the pin 30, a cap 51 is provided, which is a screw fit in the end 50 of the pin, to close the other end opening of the hollow 38. If desired, the above described screw fits may alternatively be any other suitable form of connection. Thus, the electronic circuit 39 is received within the hollow 38, and is protected in the hollow, with the hollow 38 being closed at both ends 48 and 59 by the socket of the electrical connector 40, 47 and the cap 51 respectively.

As mentioned above, the circuit board 39 is flexible. The board 39 can thus conveniently be secured in the hollow 38 of the pin 30 to the inside of the side wall 49 of the hollow 38 of the pin 30.

The strain gauge pairs S1 to S4 may also be secured to the inside of the side wall 49 of the hollow 38 of the pin 30.

The pin 30 is fixed relative to the body 11 of the vehicle so as to prevent rotation of the pin 38 about the axis 31. This is achieved by there being a recess R provided in the outer surface 46 of the pin 30, in which a location element 52 is received. The location element 52 is secured relative to the body 11 in any desired manner, and a flat inside surface 53 of the recess R provides an engagement surface which abuts with the corresponding engagement surface 54 of the location plate 52. Thus the plate 52 not only prevents rotation of the pin 30, but also locates the pin 30 axially of the body 11 of the vehicle.

The axle 14 of the vehicle comprises a lug 60 which has an opening 61 through it to receive the pin 30. Preferably the opening 61 carries a hardened insert 62 which provides a bearing material for the pin 30.

The body 11 of the vehicle carries a pair of yoke plates 63, 64 which each also have openings 65,66, respectively to receive the pin 30. When the plug 60, pin 30 and yoke plates 63,64, are assembled, the strain gauge pairs S1 to S4 may be located at regions adjacent the interfaces between the yoke plates 63,64 and the end surfaces 67 of the lug 60.

The strain gauge pairs S1 to S4 each comprise a first plurality of strain elements arranged in generally parallel fashion, extending transverse to the diametric plane P in this example at an angle of 45° to the plane P, and a second plurality of strain gauge elements, arranged in generally parallel fashion, extending transverse to the plane P, at an angle of 45° to the plane, but oppositely to the elements of the first plurality. The plane P itself is arranged generally perpendicularly to the direction of applied load on the pin 30 so that the gauge pairs S1 to S4 actually sense shear across plane P, where minimum bending of the pin 30 occurs.

It will be appreciated that as the vehicle 10 travels, the wheels 13 which are driven, can exert a torque on the pin 30. The electronic circuit 39 may be arranged to average the readings from the four strain gauge pairs S1 to S4 provided on the pin 30 so as to counteract any false signals due to any such torque forces.

Alternatively, and preferably, the strain gauge pairs S1, S3 and S2, S4, are arranged in respective bridges, as is well known in the art.

In each case, preferably the indicating means 27 provides a continuous indication to an operator of the vehicle 10 of the load sensed by the load sensing arrangement. When the load transmitted from the body 11 to the axle 14 decreases below a threshold value, indicating that the vehicle is nearly at tipping point, preferably the indicating means 27 provides an audible warning, in addition to a visual warning by the load sensed being indicated in a red region 28 of the indicating means 27. If desired, the signal from the load sensing arrangement may also be used to prevent any further movement of the loaded working implement 18 outwardly of the vehicle, or raising of the arm, both of which conditions could accentuate the risk of tipping.

Various modifications are possible without departing from the scope of the invention. For example in place of the load sensing arrangement being provided at the connection between the rear axle 14 and the body 11, to sense tipping of the vehicle, if desired the load sensing arrangement may be provided on the vehicle between the body 11 and the front and/or rear axle 14 of the vehicle to sense the actual load of the vehicle transmitted to the ground 42,.

The load sensing arrangement may be provided on other types of vehicle to the load carrying vehicle 10 described, for example to an excavating type of vehicle, or any other vehicle which comprises a working arm which extends outwardly of the body 11 of the vehicle 10 and which carries a working implement to carry a load.

If desired, four strain gauge pairs S1 to S4 need not be provided on the pin 30, but less than four or more than four strain gauge pairs may be provided as desired, provided there are at least two strain gauge pairs longitudinally spaced along the pin 30.

The hollow 38 need not open to either end of the pin 30, although this arrangement is preferred for ease of manufacturing and assembly.

Instead of the socket 46/47 being provided by the pin 30, to enable the electrical connection between the electronic circuit 39 and the remote indicating means 27, if desired, a plug of a plug and socket connector may be provided on the pin.

If desired, yokes may be provided by the axle 14 and a lug by the body 11 instead of the lug 60 being provided on the axle 14 and yoke plates 63,64, on the body 11 as described.

If desired, the pin 30 may be mounted in cantilever fashion with there only being one yoke plate.

As described, the strain gauge pairs S1 to S4 are provided inside the side wall 49 of the pin 30. If desired, the gauge pairs S1 to S4 may be provided on the outside of side wall 49 of the pin 30, for example in protective recesses. In this case, openings would need to be provided through the side wall 49, for leads to make electrical connections from the strain gauge pairs S1 to S4 to the electronic circuit 39.

## Claims

1. A load sensing arrangement comprising first (11) and second (12) members connected together by a pin (30) for relative movement about the axis (31) of the pin, the pin (30) having an internal hollow (33), at least two strain gauge means (51-54) spaced longitudinally along the pin (30) and each being secured to a side wall (49) of the pin (30) each strain gauge means (S1-S4) being electrically connected to an electronic circuit (39) which includes an amplifier to amplify signals produced by the strain gauge means (S1-S4), means to provide a signal from the electronic circuit (39) to a remote indicating means (27,28) which at least indicates when the load transmitted from the first (11) to the second (14) member through the pin (30), sensed by the strain gauge means (S1-S4), reaches a threshold value characterised in that the electronic circuit (39) is located within the internal hollow (38) of the pin, longitudinally between the two strain gauge means (S1-S4).

2. An arrangement according to claim 1 characterised in that the means which provide the signal from the electronic circuit (39) to the remote indicating means (27,28) comprise one or more electrical conductors, electrical connection being made between the electronic circuit (39) and the or each conductor by means including a plug (46) and socket type connector, at an end (49) of the pin (30).

3. An arrangement according to claim 2 characterised in that further conductors to carry power to the electronic circuit (39) are electrically connected to the electronic circuit (39) via means including the plug (46) and socket connector.

4. An arrangement according to any one of claims 1 to 3 characterised in that means are provided to prevent rotation of the pin (30) relative to the first (11) or second (14) member, the means comprising a location element (52) secured to the first (11) or second (14) member, which engages in a recess (R) provided in the outer surface (46) of the pin (30), the recess (R) providing an engagement surface (53) which co-operates with an engagement surface (54) of the location element (32) to prevent rotation of the pin (30) and to locate the pin (30) axially relative to the first (11) and second (14) members.

5. An arrangement according to any one of the preceding claims characterised in that the strain gauge means are each located within the hollow (38) of the pin (30) secured to the inside surface of the side wall (49) of the pin (30) and respective electrical leads (40-43) between the strain gauge means (S1-S4) and the electronic circuit (39) extend along the hollow (38) of the pin (30).

6. An arrangement according to any one of the preceding claims characterised in that the load sensed is that transmitted from a body (11) to an axle (14) of a load carrying vehicle (10) of the kind having a working arm (15) mounted at one end on the body (11) of the vehicle (10), and the arm (15) carrying at its other end (17) a working implement (18), the first member (11) comprising a body (11) of the vehicle (10) and the second member (14) an axle (14) thereof, the axle (14) being connected to the body (11) via the pin (30) of the load sensing arrangement, which pin (30) is provided in a position such that a central axis (31) of the pin (30) coincides with a longitudinal central axis (31) of the vehicle (10) such that the axle (14) may oscillate relative to the body (11) of the vehicle (10), as the vehicle travels over uneven ground, the working arm (15) being telescopic and capable of moving the working implement (18) towards and away from the body (11).

7. An arrangement according to claim 6 characterised in that the strain gauge means (S1-S4) sense when the load transmitted from the body (11) to the rear axle (14) of the vehicle decreases below a threshold value, or when the load transmitted from the body (11) to the front axle (36) exceeds a threshold value.

8. An arrangement according to any one of the preceding claims characterised in that each strain gauge means (S1-S4) comprises two pairs of strain gauges which are connected electronically in a bridge.

9. An arrangement according to claim 8 characterised in that the pairs of strain gauges of each strain gauge means (S1-S4) are located at opposite ends of a diameter of the pin (30), the diameter being contained within a plane which is generally perpendicular to the direction of applied load, the strain gauges each sensing movement transverse to the plane, so that the strain gauges each sense the shear forces to which the pin (30) is subjected.

10. A pin (30) for a load sensing arrangement according to any one of the preceding claims.

11. A vehicle of the kind specified having a working arm (15) mounted at one end on the body of the vehicle (10) and the arm (15) carrying at its other end (17) a working implement (18), and a load sensing arrangement in accordance with any one of claims 1 to 9, provided at the connection between a rear axle (14) of the vehicle (10) and the body (11) thereof.

FIG 1

FIG 2

EP 0 466 046 A1

FIG 3

FIG 3a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 858 475   (JACOBSON)<br>* Column 4, lines 36-59; column 5, lines 39-68; column 6, lines 1-14 * | 1,4,8,10 | B 66 F 17/00<br>G 01 L 5/13 |
| Y | | 6,7,9,11 | |
| A | | 2,3,5 | |
| | – – – | | |
| D,Y | GB-A-1 528 741   (LINER CONCRETE MACHINERY CO.)<br>* Page 3, lines 2-45 * | 6,7,9,11 | |
| | – – – | | |
| A | US-A-4 752 012   (JUERGENS)<br>* Column 9, lines 65-68; column 10, lines 1-42; column 12, lines 9-33; figure 4 * | 1,2,4,5,8,<br>9,10 | |
| | – – – | | |
| A | WO-A-8 501 346   (VALMET OY)<br>– – – | | |
| A | US-A-3 695 096   (KUTSAY)<br>– – – | | |
| A | EP-A-0 154 728   (HATAMURA)<br>– – – | | |
| A | DE-A-2 048 236   (LITTON INDUSTRIES)<br>– – – | | |
| A | GB-A-1 599 313   (LOUGHBOROUGH CONSULTANTS)<br>– – – | | |
| A | FR-A-2 356 592   (TOWMOTOR CORP.)<br>– – – | | |
| A | FR-A-2 378 272   (S.A. FRANCAISE DU FERODO)<br>– – – – – | | |

**TECHNICAL FIELDS SEARCHED (Int. Cl.5)**

B 66 F
B 66 C
G 01 G
G 01 L

The present search report has been drawn up for all claims

| Place of search | Date of completion of search | Examiner |
|---|---|---|
| The Hague | 04 October 91 | VAN DEN BERGHE E.J.J |